# EUROPEAN PATENT APPLICATION

(11) **EP 2 503 736 A1**
(43) Date of publication of application: **26.09.2012**
(21) Application number: 11187997.9
(22) Date of filing: 07.11.2011
(51) Int. Cl.: H04L 12/28, H04L 29/08

(54) **Data processing apparatus and control method thereof**

(30) Priority: 25.03.2011 JP 2011068672
(71) Applicant: Kabushiki Kaisha Toshiba, Tokyo 105-8001 (JP)
(72) Inventor: Yamanashi, Naoki, Tokyo, 105-8001 (JP)
(74) Representative: Henkel, Breuer & Partner

(57) **Abstract**

According to one embodiment, a data processing apparatus (500) which is controlled through a network (400) by a remote control apparatus (300) based on a predetermined standard and is connected to an information recording apparatus (506). The server manager (531) manages the information recording apparatus (506) as a server. The file manager (532) manages a file stored in the information recording apparatus (506). A control block (504) determines whether a device ID specifies the data processing apparatus or not, when the remote control apparatus requests file information with the device ID. The control block (504) reports the file information of the file managed by the file manager in return responding to the remote control apparatus's request for the file information. The control block (504) then reproduces a specified file in local when the specified file to be reproduced is instructed by the remote control apparatus based on the reported file information and the device ID specifies the data processing apparatus. Further, a display apparatus (555) displays the reproduced file.

## Description

Embodiments described herein relate generally to a data processing apparatus and a control method thereof.

Related to network technologies, certain guidelines, called digital living network alliance (hereinafter referred to as DLNA) guidelines, exist. Devices which comply with the guidelines can transfer content data such as video, music, and images through, for example, a home network between apparatuses made by different manufacturers. A home network of this type can be connected to, for example, a personal computer, a television receiver, and a video recording/reproducing apparatus (which also serves as a media server).

Under the circumstances as described above, for example, a video recording/reproducing apparatus can check the kinds of files recorded by operating a personal computer. In this case, the video recording/reproducing apparatus is recognized as a server. It is assumed that the personal computer is installed with the Windows (registered trademark) 7 operating system (OS).

For example, files A and B are assumed to be recorded by the video recording/reproducing apparatus. A user is assumed to want to play back and watch or listen to the file A. The television receiver is recognized as a media renderer that complies with DLNA.

In such a case,
(1) The user operates a personal computer and requests (asks) a video recording/reproducing apparatus to inform the user of the kinds of files that are stored.
(2) The video recording/reproducing apparatus responds to the personal computer by informing that files A and B are stored.
(3) The user confirms that the video recording/reproducing apparatus stores the file A by the personal computer. Next, the user gives the television receiver a command that "a certain file in a certain server is to be reproduced (the video recording/reproducing apparatus in this case)".
(4) The television receiver then commands the video recording/reproducing apparatus to reproduce (or transfer) and distribute the file A.
(5) In this manner, the television receiver receives and can display the distributed file A.

A general architecture that implements the various features of the embodiments will now be described with reference to the drawings. The drawings and the associated descriptions are provided to illustrate the embodiments and not to limit the scope of the invention.
FIG. 1 shows a typical example configuration of one embodiment;
FIG. 2 is an explanatory chart showing an example of a procedure of operation of an apparatus shown in FIG. 1;
FIG. 3 is an explanatory chart showing another example of a procedure of operation of the apparatus shown in FIG. 3;
FIG. 4 is a block diagram showing an example usage of a television receiver shown in FIG. 1; and
FIG. 5 is a block diagram showing another example usage of the television receiver shown in FIG. 1.

In recent years, information recording apparatuses (such as hard disc drives: HDD) capable of universal serial bus (USB) connection are used in television receivers. Such an HDD usually communicates only with compatible television receivers. Therefore, users cannot command reproduction of files recorded in the HDD even by operating a personal computer.

Various embodiments will be described hereinafter with reference to the accompanying drawings.

In general, according to one embodiment, there is provided a data processing apparatus and a control method thereof which are capable of enhancing access functions to access information recording apparatuses without changing commands according to existing standards.

According to one embodiment, there is provided a data processing apparatus which is controlled through a network by a remote control apparatus in compliance with a predetermined standard and is connected to an information recording apparatus. A server manager manages the information recording apparatus as a server. A file manager manages files stored in the information recording apparatus. When the remote control apparatus indicates a device ID and requests file information, a control block determines whether the device ID indicates the data processing apparatus itself or not, and notifies of information of a file managed by the file manager in response to the request for the file information. Based on the notified file information, the remote control apparatus specifies a file to be reproduced. If the device ID is of the data processing apparatus, the data processing apparatus locally reproduces the specified file. A display apparatus displays the reproduced file.

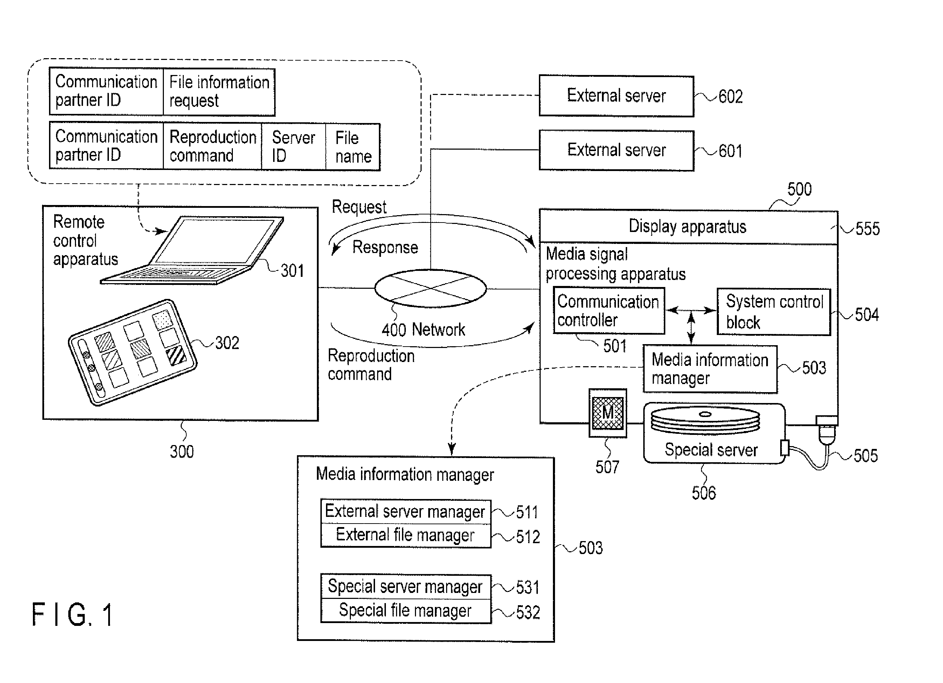

Hereinafter, an embodiment will be described with reference to the drawings. FIG. 1 shows a typical example configuration of the one embodiment. Reference symbol 300 denotes a remote control apparatus, e.g., a personal computer 301 as an apparatus which complies with the DLNA guidelines. An alternative to the personal computer 301 may be any device which can communicate with another device through a network, e.g., a portable terminal 302.

The remote control apparatus 300 can communicate with, for example, a television receiver 500 and external servers 601 and 602 through a network 400. The external servers 601 and 602 may be information recording apparatuses which use optical discs (digital versatile discs DVD and blue ray discs BD). These apparatuses are each assumed to comprise a communication system which complies with the DLNA guidelines.

The television receiver 500 comprises a main body, a display apparatus 555, and a speaker unit 556. Through a USB cable 505, a special server 506 can be connected to the television receiver 500. The special server 506 is, for example, an information recording apparatus comprising a hard disc drive (HDD).

The television receiver 500 comprises a communication controller 501 which complies with the DLNA guidelines, and can communicate with the external servers 601 and 602 and the remote control apparatus 300. A system control block 504 comprises a microcomputer in which software is installed, and totally controls each of blocks in the television receiver 500.

The television receiver is set as a media renderer. If the television receiver is set as a media renderer, the television receiver can play back content such as video, photographs, and music which are distributed from an external server through a home network. Setting information thereof is managed in the system control block 504. Since the television receiver can reproduce content stored in the special server 506 (hard disc drive: HDD), the television receiver has a function as a media player. In the present description, the special server is not limited to an HDD and may be a semiconductor memory 507. It should be noted that the semiconductor memory 507 may be a memory connected through a USB or an internal memory.

Further, the television receiver 500 comprises a media information manager 503. The media information manager 503 comprises an external server manager 511, an external file manager 512, a special manager 531, and a special file manager 532, as indicated by a dashed-line arrow.

For example, when the external server manager 511 and external file manager 512 receive a command to "reproduce a certain file in a certain server" from the remote control apparatus 300, the external server manager 511 and external file manager 512 access a specified external server. In this access, the external server manager 511 and external file manager 512 request the external server to distribute a specified file, receive the distributed file, and perform reproduction of the received file.

The special server manager 531 and special file manager 532 are constitutive elements specific to the present apparatus. The special server manager 531 manages whether the special server 506 is connected to the media-signal processing apparatus or not and also manages whether the semiconductor memory 507 is connected or not. The special file manager 532 manages files stored in the special server 506 and memory 507. When a request for informing what kind of files are stored is given from the remote control apparatus 300, the special server 506 can inform of self identification information (identification information as a server) and file names stored in the special server 506 and semiconductor memory 507. (In this manner, the remote control apparatus 300 can recognize the television receiver 500 as a media server. As has already been described above, the television receiver 500 is set as a media renderer, and can naturally function as a media player.) Reference symbol 555 denotes a display apparatus.

The foregoing description has specified an external server manager, an external file manager, a special server manager, and a special file manager. However, terms of "external" and "special" are used to distinguish the managers from each other in a simple manner. These managers need not be limited to the terms.

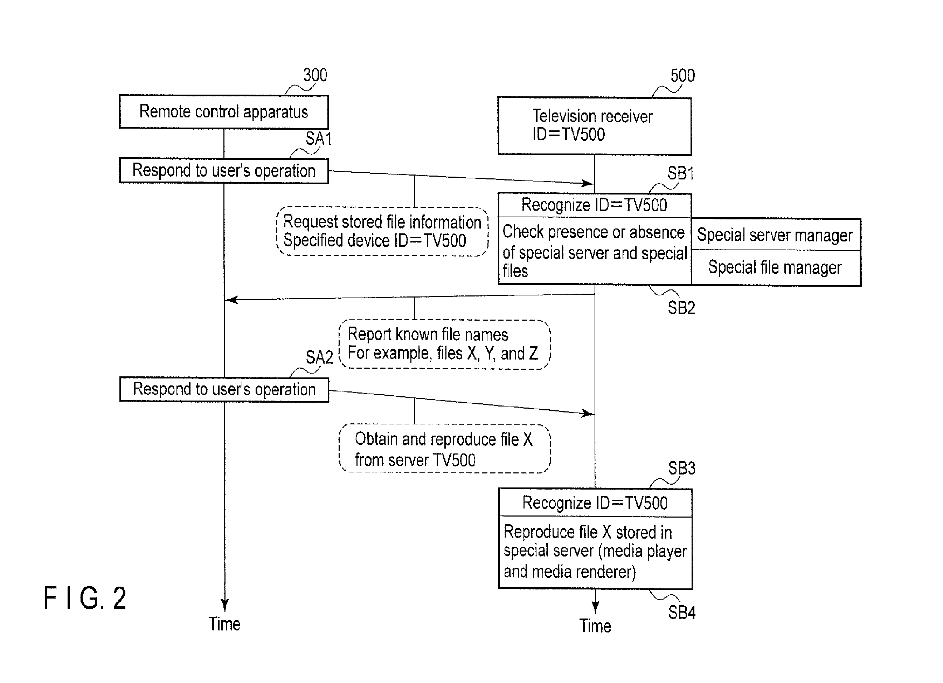

FIG. 2 shows operation when the remote control apparatus 300 and the television receiver 500 communicate with each other, a file X stored in the special server 506 is displayed by the television receiver 500. The remote control apparatus 300 requests stored file information from the television receiver 500 (device ID = TV500) in response to a user's operation (step SA1). A command at this time is named, for example, a "file information request command". In accordance with the DLNA guidelines, the "file information request command" is transmitted together with a device ID (ID = TV500) of a communication partner.

Based on control of the system control block 504, the television receiver 500 then recognizes that the device ID which specifies a communication partner specifies the data processing apparatus itself (step SB1). That is, the control block 504 comprises a self-recognition module. Further, based on information managed by the special server manager 531 and special file manager 532, the system control block 504 checks known file names (e.g., files X, Y, and Z) in the system control block 504 (step SB2), and informs the remote control apparatus 300 of a list thereof. The remote control apparatus 300 displays the device ID = TV500 and the file names (e.g., files X, Y, and Z) stored in the special server 506.

A user is now assumed to view a display screen displaying the files X, Y, and Z on the remote control apparatus 300, select the file X, and operate a reproduction command button. In response to this user's operation (step SA2), the remote control apparatus 300 transmits a command to "obtain and reproduce the file X from the server TV500".

The television receiver 500 which receives the command then recognizes that the device ID identifies the self apparatus, based on control of the system control block 504 (step SB3). Next, the system control block 504 determines that the file X to reproduce is stored in the special server 506 managed by the media information manager 503. Further, under control of the system control block 504, the television receiver 500 locally reproduces the file X (normal reproduction) stored in the special server 506 (step SB4). The television receiver at this time functions as a media renderer. That is, the television receiver 500 does not perform a reproduction processing based on a network communication framed in accordance with a predetermined standard (DLNA) but performs normal reproduction, i.e., in a local or standalone reproduction state. For example, the local reproduction includes making a so-called HDD-build-in television receiver or a television receiver connected to an external USB HDD that performs a reproduction processing by remote control operation. That is, the local reproduction includes a reproduction processing in a case that the HDD-built-in television receiver or the television receiver connected to the USB HDD is subjected to remote control operation, thereby to display a video record list of an HDD, and any content is selected for reproduction. The television receiver 500 in this case functions as a media player and also as a media renderer.

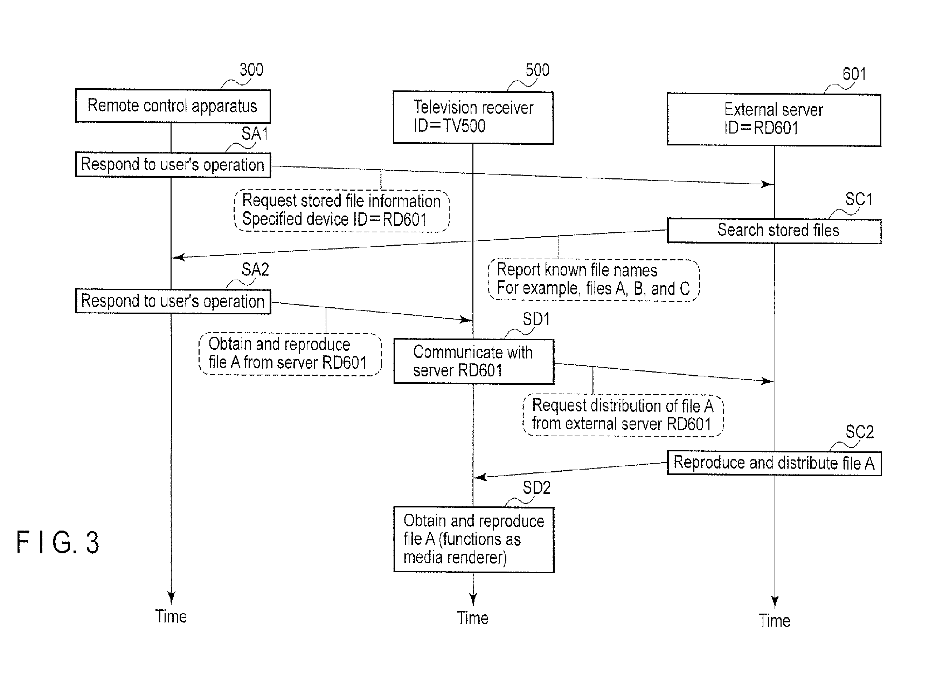

FIG. 3 shows a procedure where the remote control apparatus 300 makes the television receiver 500 reproduce a file stored in the external server 601 (where the device ID is set to ID = RD 601).

At first, the remote control apparatus 300 requests file information from the external server 601, in response to a user's operation (step SA1). That is, the remote control apparatus 300 transmits a device ID (ID = RD601) together with a "file-information request command", in accordance with the DLNA guidelines.

The external server 601 searches stored files and reports stored file names (e.g., files A, B, and C in this case) (step SC1). It is now assumed that the user wants to reproduce and watch content of the file A by the television receiver 500.

The remote control apparatus 300 transmits a command to "obtain and reproduce file A from server RD601" to the television receiver 500 (device ID = TV500) in response to a user's operation (step SA2). At this time, the server ID = RD 601 and the file name A are transmitted together with a reproduction command for the television receiver 500.

Then, based on control of the system control block 504, the television receiver 500 starts communication with the external server RD601 (step SD1), and requests distribution of the file A from the external server RD601. In response to the request, the external server RD601 reproduces and distributes the file A to the television receiver 500 (step SC2). Based on control of the system control block 504, the television receiver 500 obtains and reproduces the file A (step SD2). At this time, the television receiver does not perform the local reproduction as described above but operates based on network communication in a frame according to predetermined standards (DLNA).

In the system described above, the television receiver 500 is connected to the external server 601 through the network 400 while the special server 506 is connected, for example, through a universal serial bus (USB) cable 505. However, as shown in procedures in FIGS. 2 and 3, between when the file X stored in the special server 506 is reproduced by the television receiver 500 and when a file in the external server 601 is reproduced by the television receiver 500, the operation procedure and operation format (command format) for the remote control apparatus 300 stay constant except that the server IDs and the file names differ.

That is, the network system described above means that files stored even in a special server having a connection style which has not been assumed in the DLNA guidelines are easily accessible. In other words, access functions to access an information recording apparatus can be enhanced without changing commands according to existing standards which comply with the DLNA guidelines.

Such enhancement of access functions is achieved as follows. The television receiver 500 is provided with the media information manager 503, and particularly, the special server manager 531 and special file manager 532 are provided. These managers can be controlled based on the system control block 504, as described with reference to FIGS. 2 and 3.

The media information manager 503 comprises a memory which stores data, and may be configured as software. The software constructs a processing routine which cooperates integrally with software in the system control block 503.

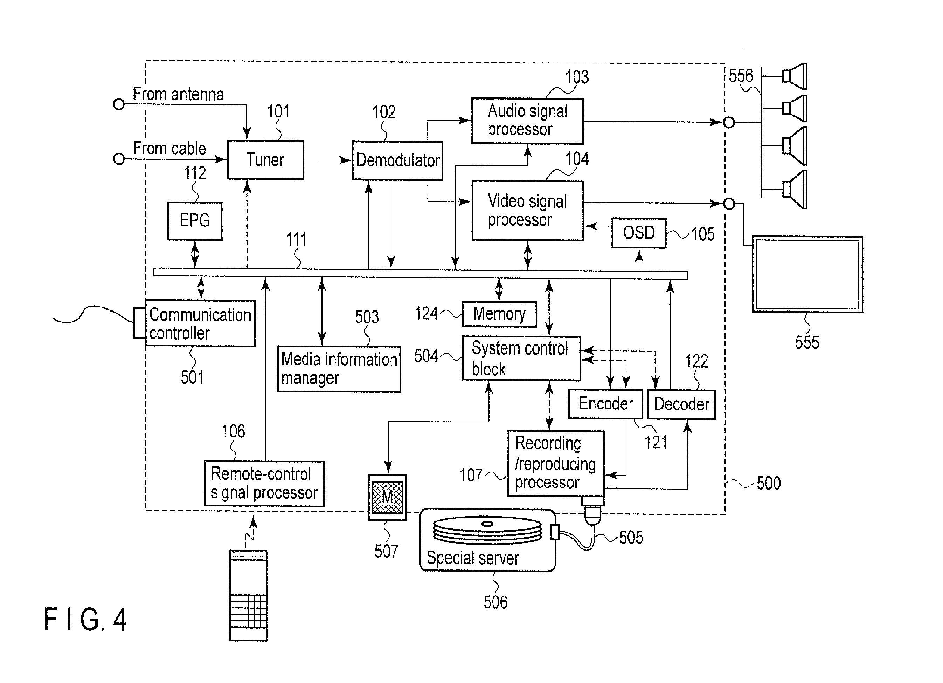

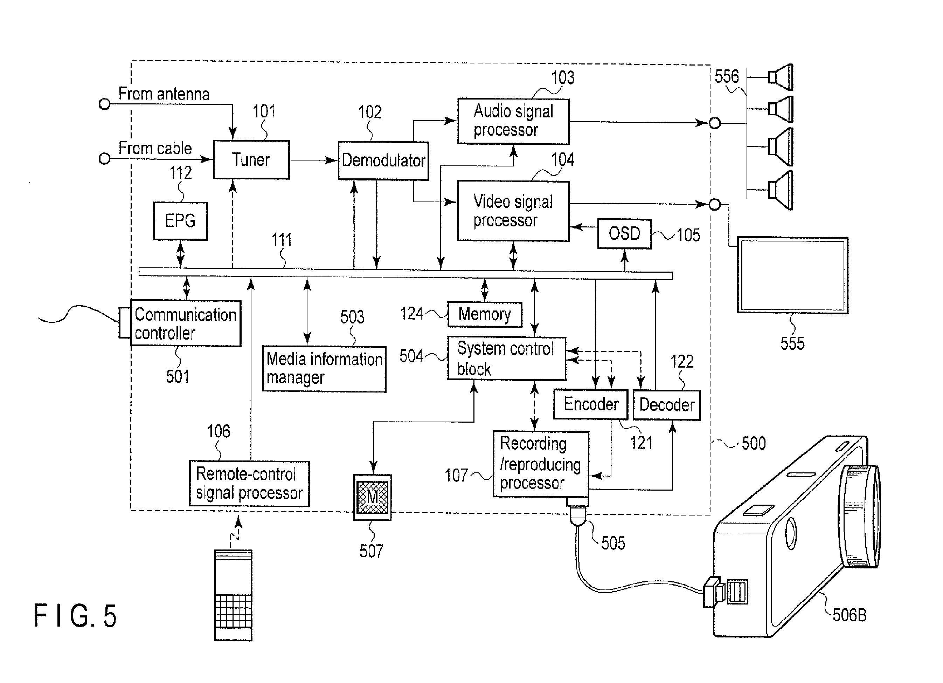

FIG. 4 and FIG. 5 more specifically shows internal blocks of the television receiver 500 described above. A tuner 101 is input with a broadcast wave or a high-frequency signal through a cable. The tuner 101 may comprise a plurality of tuners for digital terrestrial broadcast, satellite broadcast, and analogue broadcast.

The tuner 101 outputs a selected program stream to a demodulator 102, in accordance with tuning and a program select signal. The demodulator 102 separates desired audio information, video information, and control information from the program stream, and supplies the separated audio information to an audio signal processor 103 as well as the separated video information to a video signal processor 104. The demodulator 102 comprises a plurality of demodulators, e.g., a phase shift keying (PSK) demodulator, an orthogonal frequency division multiplexing (OFDM) demodulator, an analogue demodulator, and a format converter.

The audio signal processor 103 decodes input audio information, and outputs analogue audio output to a speaker system 556. The video signal processor 104 decodes video information, and outputs a decoded video signal to the display apparatus 555. As a decoding method for video information, for example, an MPEG method is used.

The video signal processor 104 can multiplex, on a main video signal, a channel number image and images expressing symbols, and/or figures, etc., from an on-screen display (OSD) processor 105. The video signal processor 104 can multiplex images expressing a program table using electronic program guide (EPG) information from the OSD processor 105, etc. Further, the video signal processor 104 can multiplex images expressing menus, etc.

An electronic-program-guide (EPG) information processor 112 can take in and save EPG information from information packets demodulated by the demodulator 102, under control of the system control block 504. The EPG information is periodically updated. The EPG information can be taken in through a communication controller 501. The communication controller 504 can communicate with a server through an external network under control of the system control block 504.

A remote-control signal processor 106 accepts and interprets commands from an operation signal from a remote control apparatus, and transfers the commands to the system control block 504.

The communication controller 501 can communicate with a server through an external network 400 under control of the system control block 504.

The aforementioned tuner 101, demodulator 102, audio signal processor 103, video signal processor 104, OSD processor 105, a remote control signal processor (operation signal processor) 106, a video signal recording/reproducing processor 107, and a communication controller 501 are connected to the system control block 504 through a main bus 111.

Further, an encoder 121 for recording format conversion and a decoder 122 for inverse recording format conversion are connected through the bus 111 to the decoder 102, audio signal processor 103, video signal processor 104, and system control block 504. For example, DVD standards and blue ray standards are available as recording formats.

A program signal demodulated by the demodulator 102 is encoded by an encoder 121, under control of the system control block 504, and is recorded onto a recording medium (such as a hard disc) in the special server 506 (in figure 4) or a Digital camera 506B ( in figure 5) by the recording/reproducing processor 107. An encoded signal read from the recording medium in the special server 506 is decoded by a decoder 122 under control of the system control block 504, and audio information is supplied to the audio signal processor 103 as well as video information to the video signal processor 104.

The memory 124 is connected to the bus 111, and is used as a buffer when image data is processed.

As described above, according to the present embodiment, there is provided a data processing apparatus capable of enhancing access functions to access an information recording apparatus, without changing commands according to existing standards.

## Claims

1. A data processing apparatus to be connected to an information recording apparatus (506), which is controlled by a remote control apparatus (300) based on a predetermined standard through a network (400), **characterized by** comprising:
a server manager (531) configured to manage the information recording apparatus (506) as a server;
a file manager (532) configured to manage a file stored in the information recording apparatus (506); and
a control block (504) configured to determine whether a device ID specifies the data processing apparatus or not, when the remote control apparatus (300) requests file information with the device ID, to report the file information of the file managed by the file manager (532) in return responding to the remote control apparatus's request for the file information, to reproduce a specified file in local when the specified file to be reproduced is instructed by the remote control apparatus (300) based on the file information and the device ID specifies the data processing apparatus, and to display the reproduced file.

2. The data processing apparatus of Claim 1, **characterized in that** the predetermined standard is a digital living network alliance (DLNA) standard.

3. The data processing apparatus of Claim 1, **characterized in that** the information recording apparatus is connected to the data processing apparatus by a cable (505).

4. The data processing apparatus of Claim 1, **characterized by** further comprising:
a tuner (101) which receives a broadcast signal;
and
a video signal processor (102, 103, 104) which processes output from the tuner.

5. The data processing apparatus of Claim 1, **characterized in that** the information recording apparatus is a hard disc drive apparatus or an imaging camera.

6. A control method for a data processing apparatus to be connected to an information recording apparatus, which is controlled by a remote control apparatus based on a predetermined standard through a network and is also controlled by a control block which operates based on software, the method **characterized by** comprising:
managing the information recording apparatus as a server;
managing a file stored in the information recording apparatus;
determining whether the device ID specifies the data processing apparatus or not, when the remote control apparatus requests file information with the device ID;
reporting the file information of the managed file in return responding to the remote control apparatus's request for the file information, specifying a file to be reproduced by the remote control apparatus based on the reported file information, and reproducing the specified file in local when the device ID specifies the data processing apparatus; and
outputting the reproduced file to a display apparatus.

7. A data processing apparatus which is controlled by a remote control apparatus based on a digital living network alliance (DLNA) standard through a network, is connected to a hard disc drive through a cable, receives a television broadcast signal by a tuner, and displays a received program signal on a display apparatus, the data processing apparatus **characterized by** comprising:
a server manager configured to manage the hard disc drive as a server;
a file manager configured to manage a file stored in the hard disc drive; and
a control block configured to determine whether a device ID specifies the data processing apparatus or not, when the remote control apparatus requests file information with the device ID, to report the file information of the file managed by the file manager in return responding to the remote control apparatus's request for the file information, and then to reproduce a specified file in local when the specified file to be reproduced is instructed by the remote control apparatus based on the reported file information and the device ID specifies the data processing apparatus.
